# EUROPÄISCHE PATENTSCHRIFT

(11) **EP 0 521 297 B1**
(45) Veröffentlichungstag und Bekanntmachung des Hinweises auf die Patenterteilung: **17.09.1997**
(21) Anmeldenummer: 92108826.6
(22) Anmeldetag: 26.05.1992
(51) Int. Cl.: C07F 9/09

(54) **Verfahren zur Herstellung von Alkylphosphocholinen und Reinherstellung derselben**
Process for the preparation of alkylphosphocholines and purification thereof
Procédé de préparation d'alkylphosphocholines et purification de celles-ci

(30) Priorität: 04.07.1991 DE 4122127
(43) Veröffentlichungstag der Anmeldung: 07.01.1993
(73) Patentinhaber: ASTA Medica Aktiengesellschaft, D-01277 Dresden (DE)
(72) Erfinder: Engel, Jürgen, Prof., W-8755 Alzenau (DE); Kutscher, Bernd Dr., W-6457 Maintal 1 (DE); Schumacher, Wolfgang, Dr., W-6070 Langen (DE); Niemeyer, Ulf, Dr., W-6050 Offenbach (DE); Olbrich, Alfred, Dr., W-6053 Obertshausen (DE); Nössner, Gerhard, Dr., W-6050 Offenbach (DE)

(56) Entgegenhaltungen:
- EP-A- 0 225 608
- PATENT ABSTRACTS OF JAPAN vol. 11, no. 193 (C-430)(2640) 20. Juni 1987

## Beschreibung

Eibl et al. (EP 225 608) beschreiben die Herstellung und Verwendung von Alkylphosphocholinen zur Tumortherapie.
Das Herstellungsverfahren von Eibl verwendet als Ausgangssubstanzen den n-Alkohol und Phosphoroxychlorid. Sie werden zum Phosphorsäureesterdichlorid in Tetrahydrofuran umgesetzt.
In einem zweiten Schritt wird 2-Aminoethanol mit dem Phosphorsäureesterdichlorid zum 2-Hexadecyl-1,3,2-oxaphospholan-2-oxid in Dioxan umgesetzt. Die Hydrolyse mit 2n Salzsäure ergibt das offenkettige Amin, welches mit Dimethylsulfat in 2-Propanol erschöpfend zum Alkylphosphocholin methyliert wird.

Dieses Verfahren besitzt folgende Nachteile:
Es ist notwendig, die Zwischenprodukte zu isolieren und zu reinigen. Weiter werden alkylierende Reagentien benutzt. Die Verwendung von Kaliumkarbonat als Hilfsbase in diesem Verfahrensschritt führt zu einem für pharmazeutische Zwecke unerwünscht hohen Kaliumgehalt im Produkt.

Langkettige Alkylphosphocholine mit antimikrobieller Wirksamkeit werden von Kanetani et al., Nippon Kayaku Kaishi, 9, 1452 (1984) beschrieben.
Sie werden gemäß folgendem Verfahren hergestellt:
Ethylenglykol und Phosphortrichlorid werden zum 2-Chlor-1,3,2-dioxaphospholan umgesetzt, das destillativ gereinigte Produkt wurde mit Sauerstoff zum 2-Chlor-1,3,2-dioxaphospholan-2-oxid oxidiert und anschließend erneut destilliert. Das 2-Chlor-1,3,2-dioxaphospholan-2-oxid wird anschließend mit 1-Hexadecanol zum 2-Hexadecyl-1,3,2-dioxaphospholan-2-oxid umgesetzt. Das 2-Hexadecyl-1,3,2-dioxaphospholan-2-oxid wird mit Trimethylamin im Autoklaven zum Hexadecylphosphocholin umgesetzt, das Rohprodukt wird sowohl mit alkalischem als auch mit saurem Ionenaustauscher gereinigt und aus Aceton/Chloroform umkristallisiert.
Das analoge Verfahren dient auch zur Herstellung der Octyl-, Decyl-, Dodecyl-, Tetradecyl-, Octadecyl-Derivate.

Dieses Verfahren hat die Nachteile, daß im letzten Verfahrensschritt unter erhöhtem Druck gearbeitet werden muß, die Verwendung von Trimethylamin stellt bei der technischen Darstellung der Substanz ein gewerbehygienisches Problem dar.
Weiter ist von Nachteil, daß die hydrolyseempfindlichen Zwischenprodukte 2-Chlor-1,3,2-dioxaphospholan, 2-Chlor-1,3,2-dioxaphospholan-2-oxid und 2-Hexadecyl-2-oxa- 1,3,2-dioxaphospholan isoliert und gereinigt werden müssen. Außerdem werden umweltbelastende Lösungsmittel wie Benzol benutzt, wobei die Lösungsmittel von Stufe zu Stufe gewechselt werden.

Alle bekannten Verfahren verwenden zur Aufarbeitung und Reinigung der Rohprodukte chromatographische Methoden.

Solche chromatographische Aufarbeitungsverfahren sind jedoch mit folgenden Nachteilen behaftet:
- Ihre Übertragung in den technischen Maßstab bereitet Schwierigkeiten, da die Abmessungen der stationären Phase nicht beliebig vergrößerbar sind.
- Chromatographische Verfahren sind zeitaufwendig.

Die Erfindung betrifft ein neues, vorteilhaftes Herstellungs- und Aufarbeitungsverfahren für Akylphosphocholine.

Überraschenderweise wurde gefunden, daß durch das erfindungsgemäße Verfahren eine höhere Gesamtausbeute erzielt wird, obwohl ein Reinigungsschnitt weniger als in den vorbekannten Verfahren angewandt wird.
Weiterhin wird erfindungsgemäß weniger Lösungsmittel verwendet.
Das erfindungsgemäße Verfahren vermeidet auch die Verwendung von alkylierenden Reagentien, wie z. B. Dimethylsulfat, die durch die Verwendung von Kaliumkarbonat als Hilfsbase zu einem hohen Kaliumgehalt des Produkts führen. Der Kaliumgehalt muß bei Substanzen, die als pharmazeutische Wirkstoffe eingesetzt werden, möglichst gering sein.

Das erfindungsgmäße Verfahren vermeidet den zeitaufwendigen Chromographieschritt in der Aufarbeitung.

Die im beanspruchten Verfahren erzielte Produktreinheit ist höher als in den bekannten Verfahren.

Die erste Stufe der Umsetzung besteht in der Reaktion von Phosphoroxychlorid in halogenierten Kohlenwasserstoffen, gesättigten cyclischen Ethern, acyclischen Ethern, gesättigten Kohlenwasserstoffen mit 5 bis 10 C-Atomen, flüssigen aromatischen Kohlenwasserstoffen, die auch durch Halogen (insbesondere Chlor) substituiert sein können, oder in Gemischen aus den vorstehend erwähnten Lösungsmitteln oder ohne Lösungsmittel, gegebenenfalls in Gegenwart einer hierfür üblichen basichen Substanz mit einem n-Alkanol mit einer Kettenlänge von 14-18 Kohlenstoffatomen.

Als halogenierte Kohlenwasserstoffe kommen beispielsweise Kohlenwasserstoffe aus 1 bis 6 C-Atomen infrage, wobei ein oder mehrere oder alle Wasserstoffatome durch Chloratome ersetzt sind. Beispielsweise können Methylenchlorid, Chloroform, Ethylenchlorid, Chlorbenzol, Dichlorbenzol verwendet werden. Falls es sich um halogensubsituierte aromatische Kohlenwasserstoffe handelt, sind diese vorzugsweise mit einem oder zwei Halogenatomen substituiert.

Als gesättigte cyclische Ether können beispielsweise Ether mit einer Ringröße von 5-6, die aus Kohlenstoffatomen und einem oder 2 Sauerstoffatomen bestehen, verwendet werden.
Beispiele hierfür sind Tetrahydrofuran und Dioxan.

Die acyclischen Ether bestehen aus 2 bis 8 Kohlenstoffatomen und sind flüssig.
Beispielsweise kommen infrage: Diethylether, Diisobutylether, Methyl-tert.-butylether, Diisopropylether.

Als gesättigte Kohlenwasserstoffe kommen unverzweigte und verzweigte Kohlenwasserstoffe, die aus 5 bis 10 Kohlenstoffatomen bestehen und flüssig sind, infrage.
Beispielsweise kommen Pentan, Hexan, Heptan, Cyclohexan, infrage.

Als aromatische Kohlenwasserstoffe kommen beispielsweise Benzol und alkylsubstituierte Benzole, wobei die Alkylsubstituenten aus 1 bis 5 Kohlenstoffatomen bestehen, infrage

Als basische Substanzen sowohl für die Reaktion des Phosphoroxychlorids mit dem n-Alkanol als auch für die anschließende Umsetzung mit dem Cholinsalz kommen Amine infrage, beispielsweise aliphatische Amine der Formel NR₁R₂R₃, wobei R₁, R₂ und R₃ gleich oder verschieden sind und Wasserstoff oder C₁-C₆-Alkyl bedeuten, aromatische Amine wie Pyridin, Picolin, Chinolin.
Bei der Umsetzung mit dem Cholinsalz kann die hier erforderliche basische Substanz gleichzeitig mit dem Cholinsalz oder auch vor dem Cholinsalz zugesetzt werden. Für die Reaktion mit dem Cholinsalz ist in jedem Fall ein Lösungsmittel erforderlich; das heißt falls der erste Reaktionsschritt ohne ein besonderes Lösungsmittel erfolgt, muß ein solches jetzt zugegeben werden. Das Molverhältnis von Phosphoroxichlorid zu dem Alkanol liegt zum Beispiel zwischen 1,5:1 bis 1:1,1.

Das Cholinsalz wird beispielsweise in Bezug auf das Alkanol im Überschuß eingesetzt (etwa 1,1 - 1,5 molarer Überschuß).
Falls die Reaktion des Phosphoroxychlorids mit dem Alkanol in Gegenwart einer basischen Substanz erfolgt, ist die Menge der basischen Substanz beispielsweise 1 bis 3 Mol bezogen auf 1 Mol POCl₃.
Für die anschließende Umsetzung mit dem Cholinsalz ist die verwendete Menge an basischer Substanz beispielsweise 1 bis 5 Mol bezogen auf 1 Mol Alkanol.

Die Reaktionstemperatur der Umsetzung von Phosphoroxychlorid mit n-Alkanol liegt zwischen -30°C und +30^{o}C, vorzugsweise -15°C und +5°C insbesondere -10°C und -5°C.

Die Reaktionszeit dieser Umsetzung beträgt beispielsweise 0,5-5 Stunden, vorzugsweise 1-3 Stunden, insbesondere 1,5-2 Stunden. Falls die Reaktion in Gegenwart einer basischen Substanz erfolgt, verläuft sie im allgemeinen schnell (etwa 30 Minuten).

Danach wird das Cholinsalz portionsweise oder vollständig zugegeben.
Als Salze des Cholins kommen Salze mit Mineralsäuren, (wie zum Beispiel Schwefelsäure, Salzsäure) infrage, ferner Salze des Cholins mit organischen Säuren, wie z. B. Essigsäure, para-Toluolsulfonsäure und ähnliche.

Dieser Reaktionsschritt erfolgt in einem inerten Lösungsmittel. Als Lösungsmittel kommen hier die gleichen infrage, die für die Umsetzung des Phosphoroxychlorids mit dem n-Alkanol verwendet werden, falls diese Umsetzung in einem Lösungsmittel erfolgt.

Anschließend wird die basische Substanz in einem der angegebenen Lösungsmittel gelöst, oder ohne Lösungsmittel zugetropft.
Vorzugsweise werden als Lösungsmittel für die basische Substanz hier verwendet: Halogenierte Kohlenwasserstoffe, gesättigte cyclische Ether, acyclische Ether, gesättigte Kohlenwasserstoffe mit 5 bis 10 Kohlenstoffatomen, flüssigen aromatischen Kohlenwasserstoffe oder Gemische aus vorstehend erwähnten Lösungsmitteln.
Es handelt sich hier um die gleichen Lösungsmittel, wie sie für die Umsetzung des Phosphoroxychlorids mit dem n-Alkanol verwendet werden können.

Durch die Zugabe der basischen Substanz steigt die Temperatur. Man sorgt dafür, daß die Temperatur in einem Bereich zwischen 0°C bis 40°C, vorzugsweise 10°C bis 30°C, insbesondere auf 15°C bis 20°C gehalten wird.

Die Reaktionsmischung wird dann noch bei 5°C bis 30°C, vorzugsweise 15°C und 25°C gerührt, (beispielsweise 1 Stunde bis 40 Stunden, vorzugsweise 3 Stunden bis 15 Stunden.)

Die Hydrolyse des Reaktionsansatzes erfolgt durch Zugabe von Wasser, wobei eine Temperatur zwichen 10°C und 30°C, vorzugsweise 15°C und 30°C, insbesondere zwischen 15°C und 20°C eingehalten werden soll.

Die zuvor erwähnten Hydrolyseflüssigkeiten können auch basische Subsanzen enthalten. Als solche basischen Substanzen kommen Carbonate und Hydrogencarbonate der Alkali- und Erdalkalimetalle infrage.

Zur Vervollständigung der Hydrolyse wird anschließend noch 0,5 Stunden bis 4 Stunden, vorzugsweise 1 bis 3 Stunden, insbesondere 1,5 bis 2,5 Stunden bei 10°C bis 30°C, vorzugsweise bei 15°C bis 25°C, insbesondere bei 18°C bis 22°C gerührt.

Die Reaktionslösung wird dann mit einem Gemisch aus Wasser und Alkoholen (vorzugsweise aliphatische gesättigte Alkohole mit 1 bis 4 Kohlenstoffatomen), das gegebenenfalls noch eine basische Substanz erhalten kann, gewaschen.
Das Mischungsverhältnis Wasser:Alkohol kann beispielsweise zwischen 5 und 0,5 liegen, vorzugsweise 1-3 (V/V).

Als basische Substanzen für die Waschflüssigkeit kommen zum Beispiel Carbonate und Hydrogencarbonate der Alkali- und Erdalkalimetalle sowie Ammoniak in Form der wässrigen Lösung infrage. Besonders bevorzugt ist eine 3%ige Natriumkarbonatlösung in Wasser.

Gegebenenfalls kann anschließend eine Waschung der Reaktionslösung mit einer sauren Lösung vorgenommen werden.
Vorteilhaft ist die saure Waschung zur Entfernung noch nicht umgesetzter basischer Anteile der Reaktionslösung, insbesondere bei der Verwendung von Methylenchlorid als Lösungsmittel.

Die Waschlösung besteht aus einem Gemisch aus Wasser und Alkoholen. Vorzugsweise kommen Mischungen aus aliphatischen gesättigten Alkoholen mit 1 bis 4 Kohlenstoffatomen infrage, wobei gegebenenfalls noch eine saure Substanz anwesend sein kann. Das Mischungsverhältnis Wasser:Alkohol kann beispielsweise zwischen 5 und 0,5 liegen, vorzugsweise 1-3 (V/V).

Als saure Substanz für die Waschflüssigkeit kommen zum Beispiel Mineralsäuren und organische Säuren infrage, zum Beispiel Salzsäure, Schwefelsäure oder Weinsäure, und Zitronensäure.

Besonders bevorzugt ist eine 10% Lösung von Salzsäure in Wasser.

Anschließend wird noch einmal mit einem Gemisch aus Wasser und Alkoholen gewaschen. Vorzugsweise kommen Mischungen aus aliphatischen gesättigten Alkoholen mit 1 bis 4 Kohlenstoffatomen infrage, wobei gegebenenfalls noch eine basische Substanz anwesend sein kann.
Das Mischungsverhältnis Wasser: Alkohol kann beispielsweise zwischen 5 und 0,5 liegen, vorzugsweise 1-3.

Die gewaschenen Phasen werden dann vereinigt und in üblicher Weise getrocknet, und dann das Lösungsmittel (vorzugsweise unter vermindertem Druck, zum Beispiel 5-100 mbar) gegebenenfalls nach Zugabe von 1,5-3 Liter, vorzugsweise 2-2,5 Liter eines aliphatischen Alkohols entfernt (bezogen auf 1 Gewichtsteil trocknes Produkt). Als Alkohole kommen vorzugsweise gesättigte aliphatische Alkohole mit einer Kettenlänge von 1 und 5 Kohlenstoffatomen in Frage. Besonders bevorzugt als Alkohol ist hierbei n-Butanol, Isopropanol. Diese Alkoholbehandlung hat den Zweck der vollständigen Entfernung von Restwasser.

Das so erhaltene Produkt kann nach der üblichen Weise (z.B. durch Chromatographie, Umkristallisieren) gereinigt werden.

Ein Alkylphosphocholin-Rohprodukt beziehungsweise der wie oben beschriebene feste Rückstand wird beispielsweise in gesättigten aliphatischen Ketonen (3-6 Kohlenstoffatome), beispielsweise Aceton, Butanon, Methyl-tert.-butylketon aufgeschlämmt, 1 bis 4 Stunden, vorzugsweise 2 Stunden gerührt, abgesaugt und bei 20°C bis 50°C im Vakuum bei 5 Torr bis 100 Torr getrocknet.

Besonders vorteilhaft ist jedoch das folgende erfindungsgemäße Reinigungsverfahren:
Das so vorgereinigte Produkt wird in wasserfreien Alkoholen (C₁ bis C₄) bzw. solchen Alkoholen, die höchstens bis zu 5 Gewichts-% Wasser enthalten bei 20°C bis 60°C, vorzugsweise 40°C aufgenommen und vom Unlöslichen abfiltriert.
Als Alkohole werden beispielsweise Methanol, Ethanol, Isopropanol, Butanol, Isobutanol verwendet.
Weiter kann das vorgereinigte Produkt auch in Wasser gelöst werden.
Das erhaltene Filtrat wird dann mit einem Mischbett-Ionenaustauscher, zum Beispiel Amberlite® MB3, beispielsweise 1 bis 5 Stunden, vorzugsweise 2 Stunden bei 10°C bis 50°C, vorzugsweise 20°C gerührt.
Anstelle eines Mischbett-Ionenaustauschers kann die Reinigung auch gleichzeitig oder nacheinander mit einem sauren Ionenaustauscher und einem basischen Ionenaustauscher erfolgen.

Als Ionenaustauscher können alle unlösliche Feststoffe, die ionenaustauschende Gruppen enthalten, verwendet werden.

Saure Ionenaustauscher sind solche, die z.B. saure Gruppen, wie Sulfonsäuregruppen, Carboxylgruppen enthalten. Beispiele sind Ionenaustauscher mit Sulfonsäuregruppen an einer Polystrolmatrix, wie zum Beispiel
Amberlite® IR 120, Dowex® HCR,

Duolite® C 20 oder Lewatit® S 100.
Schwach saure Ionenaustauscher sind zum Beispiel solche, die auf Basis einer Polyacrylsäure-Matrix, wie z. B. Amberlite® IRC 76, Duolite® C 433 oder Relite® CC Carbonsäuregruppen tragen.

Als basische Ionenaustauscher kommen beispielsweise solche in Frage, die an einer Polymer-Matrix (z.B. Polystyrol-Matrix) primäre, sekundäre, tertiäre oder quartäre Aminogruppen tragen, wie zum Beispiel
Duolite® A 101, Duolite® A 102,
Duolite®15 A 348, Duolite ® A 365,
Duolite® A 375, Amberlite® IRA 67,
Duolite® A 375, Amberlite® IRA 458 und
Duolite® A 132.

Mischbettionenaustauscher sind Gemische aus sauren und alkalischen Ionenaustauscherharzen, wie zum Beispiel
Amberlite® MB1, Amberlite® MB2,
Amberlite® MB3 und Amberlite® MB6.

Desweiteren können alle handelsüblichen Ionenaustauscher im Verfahren eingesetzt werden.

Im übrigen wird auf Ullmann's Encyclopedia of Industrial Chemistry, 5. Auflage (1989), Band A14, S. 450 verwiesen.

Nach dem Absaugen vom Ionenaustauscherharz wir unter vermindertem Druck (beispielsweise 20 Torr bis 200 Torr) bei 40°C bis 70°C eingedampft und anschließend aus halogenierten Kohlenwasserstoffen oder aus Alkohol/Keton-Gemischen umkristallisiert.

Als halogenierte Kohlenwasserstoffe für die Umkristallisation kommen beispielsweise Kohlenwasserstoffe aus 1 bis 6 C-Atomen infrage, wobei ein oder mehrere oder alle Wasserstoffatome durch Chloratome ersetzt sind.
Beispielsweise können Methylenchlorid, Chloroform,

Ethylenchlorid, Chlorbenzol verwendet werden.

Als Alkohole kommen gesättigte aliphatische Alkohole mit 1 bis 6 Kohlenstoffatomen und 1 bis 2 Hydroxylgruppen in Betracht. Als Ketone kommen gesättigte, aliphatische Ketone mit 3 bis 8 Kohlenstoffatomen in Betracht.

Das Mischungsverhältnis Alkohol:Keton beträgt 1 zu 1-5 (Volumen/Volumen).
Besonders bevorzugt ist ein Ethanol/Aceton-Gemisch im Verhältnis 1 : 1 (V/V).

Die erhaltenen Kristalle des Alkylphosphocholins werden abgesaugt und beispielsweise mit gesättigten Kohlenwasserstoffen mit 1 bis 6 Kohlenstoffatomen gewaschen. (Temperatur der Waschflüssigkeit z.B. 15 bis 30°C).

Die Trocknung erfolgt beispielsweise im Vakuum bei 40°C bis 80°C über üblichen Trockenmitteln, beispielsweise Phosphorpentoxid oder Silicagel.

### Beispiel 1

### Herstellung von Hexadecyl-phosphocholin

In einer 6 Liter-Rührapparatur werden unter Stickstoff 1,0 mol (92 ml) POCl₃ in 1,5 l Chloroform vorgelegt und im Eisbad auf 5 ^{o}C abgekühlt. 0,90 mol (218 g) Hexadecanol werden in 700 ml Chloroform gelöst und zusammen mit 4,00 mol (320 ml) Pyridin bei einer Temperatur von 5 -12 ^{o}C zugetropft. Zutropfzeit: 1,25 Stunden. Der Tropftrichter wird mit den restlichen 300 ml Chloroform nachgespült. Nach eineinhalb Stunden Nachrühren bei 0 - 5 ^{o}C werden 1,35 mol (372 g) festes Cholintosylat zugegeben und anschließend 400 ml Pyridin innerhalb von 15 Minuten zugetropft. Die Temperatur steigt dabei auf 20 ^{o}C an. Das Eisbad wird entfernt und die Reaktionsmischung 3 Stunden bei Raumtemperatur gerührt. Zur Hydrolyse werden 150 ml Wasser innerhalb von 20 Minuten zugetropft, wobei die Temperatur von 25 ^{o}C auf 36 ^{o}C ansteigt. Nach einer halben Stunde Rühren wird die Reaktionslösung je einmal mit 1,50 Liter Wasser/Methanol (1:1), 1,50 Liter 3%igem Natriumcarbonat/Methanol (1:1) und 1,50 Liter Wasser/Methanol (1:9) gewaschen. Die so gewaschene Chloroform-Phase wird über Natriumsulfat getrocknet und nach Zugabe von 50 ml i-Propanol im Vakuum einrotiert. Zum Trocknen wird n-Butanol zugegeben und erneut einrotiert.

### Die Reinigung geschieht in folgender Weise:

Der Rückstand wird in 2,0 Liter Aceton aufgeschlämmt, ca. 2 Stunden gerührt, abgesaugt und bei 30 ^{o}C im Vakuum getrocknet. Rohausbeute: 325 g (87 %). Das Rohprodukt wird in 3,0 Liter absololutem Ethanol aufgenommen und von Unlöslichem abfiltriert. Das Filtrat wird mit 1,0 Liter Mischbett-Ionenaustauscher Amberlite MB 3®(FLUKA) zwei Stunden gerührt. Nach dem Absaugen vom Ionenaustauscherharz wird im Vakuum einrotiert und anschließend einmal aus 0,70 Liter Methylenchlorid umkristallisiert. Vollständige Kristallisation wird im Kühlschrank erreicht. Die Krisalle werden abgesaugt und mit Pentan gewaschen. Trocknung im Vakuum bei 30 ^{o}C über Phosphorpentoxid.

### Ausbeute 193 g (0,47 mol, 53 %)

Das Reaktionsprodukt hat einen Schmelzpunkt von 241-245°C

Nach der gleichen Vorschrift wurden die Beispiele 2-5 dargestellt.

### Beispiel 2:

D-19390: 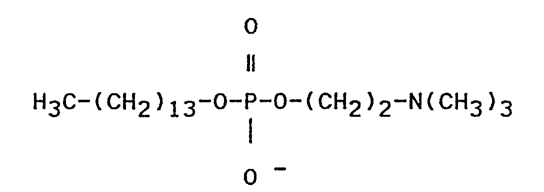 Fp.: 260°C (Zers.)
C₁₉H₄₂NO₄P (379.52)
DC: 89a (Chloroform/Methanol/Ammoniak 25% =70:20:10) Rf=0.27
EA:

| | | | | | | |
|---|---|---|---|---|---|---|
| ber. | C | 60.13% | H | 11.16% | N | 3.69% |
| *H₂O | | 57.41% | | 11.16% | | 3.52% |
| gef. | C | 57.40% | H | 11.42 | N | 3.61% |
| | | 57.43% | | 11.47% | | 3.65% |

¹H-NMR: (250 MHz, CDCl₃)
δ=0.90 ppm (t, 3H) 3.80 (q, 2H)
1.25 (m, 22H) 3.85 (m, 2H)
1.55 (p, 2H) 4.25 (m, 2H)
3.40 (s, 9H)

### Beispiel 3:

D-20403: 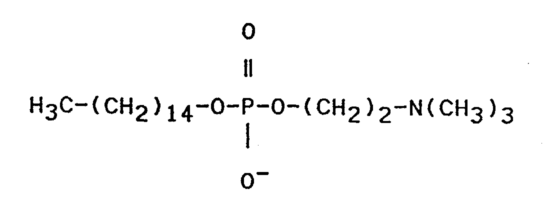 Fp.: 244°C (Zers.)
C₂₀H₄₄NO₄P (393.55)
DC: 89a (Chloroform/Methanol/Ammoniak 25% =70:40:10) Rf=0.49
EA:

| | | | | | | |
|---|---|---|---|---|---|---|
| ber. | C | 61.04% | H | 11.27% | N | 3.56% |
| *2H₂O | | 55.92% | | 11.26% | | 3.26% |
| gef. | C | 56.14% | H | 10.99% | N | 3.67% |
| | | 55.74% | | 10.85% | | 3.59% |

¹H-NMR: (250 MHz, CDCl₃)
δ=0.90 ppm (t, 3H) 3.80 (q, 2H)
1.30 (m, 24H) 3.85 (m, 2H)
1.55 (p, 2H) 4.25 (m, 2H)
3.40 (s, 9H)

### Beispiel 4:

D-19767: 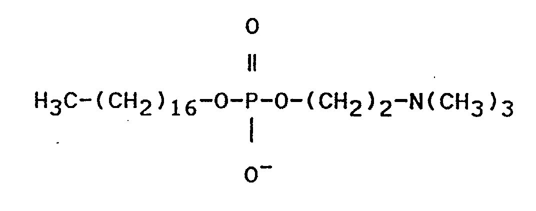 Fp.: 254 - 256°C
C₂₂H₄₈NO₄P (421.61)
DC: 127c (I-Butanol/Eisessig/Wasser=60:20:20) Rf=0.34
EA:

| | | | | | | |
|---|---|---|---|---|---|---|
| ber. | C | 62.68% | H | 11.48% | N | 3.32% |
| *H₂O | C | 60.11% | | 11.46% | | 3.19% |
| gef. | C | 60.2% | H | 11.7% | N | 3.1% |
| | | 60.5% | | 11.7% | | |

¹H-NMR: (250 MHz, CDCl₃)
δ=0.90ppm (t, 3H) 3.80 (q, 2H)
1.25 (m, 28H) 3.85 (m, 2H)
1.60 (p, 2H) 4.25 (m, 2H)
3.40 (s, 9H)

### Beispiel 5:

D-19391: 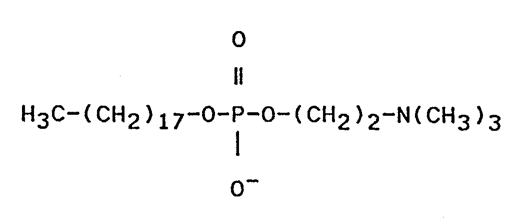 Fp.: 258°C (Zers.)
C₂₃H₅₀NO₄P (435.62)
DC: 126 (1-Butanol/Eisessig/Wasser=40:10:10) Rf=0.13
EA:

| | | | | | | |
|---|---|---|---|---|---|---|
| ber. | C | 63.41% | H | 11.57% | N | 3.22% |
| *H₂O | | 60.90% | | 11.55% | | 3.09% |
| gef. | C | 60.80% | H | 11.93% | N | 3.15% |
| | | 60.83% | | 12.02% | | 3.15% |

¹H-NMR: (250 MHz, CDCl₃)
δ=0.90 ppm (t, 3H) 3.80 (q, 2H)
1.25 (m, 30H) 3.85 (m, 2H)
1.60 (p, 2H) 4.30 (m, 2H)
3.40 (s, 9H)

## Patentansprüche

1. Verfahren zur Herstellung von C₁₄-C₁₈-Alkylphosphocholinen, durch Reaktion eines n-Alkanols mit Phosphoroxychlorid und einem Cholinsalz, dadurch gekennzeichnet, daß man in einem Eintopfverfahren ein n-Alkanol mit einer Kettenlänge von C₁₄-C₁₈ mit Phosphoroxychlorid in einem inerten Lösungsmittel oder auch ohne Lösungsmittel in Gegenwart oder Abwesenheit einer basischen Substanz umsetzt, das erhaltene Produkt ohne Isolierung und Reinigung in einem inerten Lösungsmittel mit einem Cholinsalz in Gegenwart einer basischen Substanz zum Phosphorsäurediesterchlorid weiter umsetzt und durch anschließende Hydrolyse das Alkylphosphocholin freisetzt und isoliert.

2. Verfahren zur Herstellung von C₁₄-C₁₈-Alkylphosphocholinen, nach Anspruch 1 dadurch gekennzeichnet, daß man eine Lösung der nach dem Verfahren gemäß Anspruch 1 erhaltenen Alkylphosphocholine, in einem organischen Mittel mit einem Mischbettionenaustauscher oder nacheinander mit einem sauren lonenaustauscher und einem basischen lonenaustauscher behandelt.

3. Verfahren zur Herstellung von C₁₄-C₁₈-Alkylphosphocholinen, nach Anspruch 1 dadurch gekennzeichnet, daß die Temperatur bei der Umsetzung des Rohproduktes mit dem Cholinsalz/Base zwischen 0°C und 40 °C liegt.

## Claims

1. Process for the preparation of C₁₄-C₁₈-alkylphosphocholines, by reaction of an n-alkanol with phosphorus oxychloride and a choline salt, characterized in that an n-alkanol having a chain length of C₁₄-C₁₈ is reacted in a one-pot process with phosphorus oxychloride in an inert solvent or alternatively without solvent in the presence or absence of a basic substance, the product obtained is further reacted with a choline salt in an inert solvent without isolation and purification in the presence of a basic substance to give the chlorophosphoric acid diester and the alkylphosphocholine is released and isolated by subsequent hydrolysis.

2. Process for the preparation of C₁₄-C₁₈-alkylphosphocholines according to Claim 1, characterized in that a solution of the alkylphosphocholines obtained by the process according to Claim 1 is treated in an organic medium with a mixed-bed ion exchanger or in succession with an acidic ion exchanger and a basic ion exchanger.

3. Process for the preparation of C₁₄-C₁₈-alkylphosphocholines according to Claim 1, characterized in that the temperature in the reaction of the crude product with the choline salt/base is between 0°C and 40°C.

## Revendications

1. Procédé de préparation de C₁₄-C₁₈-alkylphosphocholines, par réaction d'un n-alcanol avec de l'oxychlorure de phosphore et un sel de choline, caractérisé en ce que l'on fait réagir dans un procédé monotope un n-alcanol ayant une longueur de chaîne en C₁₄-C₁₈, avec de l'oxychlorure de phosphore dans un solvant inerte ou également sans solvant, en présence ou en l'absence d'une substance basique, en ce que l'on fait en outre réagir le produit obtenu, sans isolation et purification, dans un solvant inerte avec un sel de choline en présence d'une substance basique pour donner un chlorure de diester de l'acide phosphorique et en ce que l'on libère et isole l'alkylphosphocholine par hydrolyse ultérieure.

2. Procédé de préparation de C₁₄-C₁₈-alkylphosphocholines selon la revendication 1, caractérisé en ce que l'on traite une solution des alkylphosphocholines obtenues d'après le procédé selon la revendication 1 dans un milieu organique, avec un échangeur d'ions à lit mélangé ou successivement avec un échangeur d'ions acide et un échangeur d'ions basique.

3. Procédé de préparation de C14-C18-alkylphosphocholines selon la revendication 1, caractérisé en ce que la température lors de la réaction du produit brut avec le sel de choline/base se situe entre 0°C et 40°C.
